(19) Europäisches Patentamt
European Patent Office
Office européen des brevets

(11) **EP 1 785 748 A1**

(12) **EUROPEAN PATENT APPLICATION**

(43) Date of publication:
**16.05.2007 Bulletin 2007/20**

(51) Int Cl.:
***G02B 1/11*** *(2006.01)*

(21) Application number: **05425788.6**

(22) Date of filing: **10.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **C.R.F. SOCIETA' CONSORTILE PER AZIONI**
**10043 Orbassano (Torino) (IT)**

(72) Inventors:
• **Repetto, Piermario,**
**C.R.F.**
**10043 Orbassano**
**Torino (IT)**

• **Bernard, Stefano,**
**C.R.F.**
**10043 Orbassano**
**Torino (IT)**
• **Lambertini, Vito Guido,**
**C.R.F.**
**10043 Orbassano**
**Torino (IT)**

(74) Representative: **Notaro, Giancarlo**
**c/o Buzzi, Notaro & Antonielli d'Oulx**
**Via Maria Vittoria 18**
**10123 Torino (IT)**

(54) **Anti-reflection nano-metric structure based on anodised porous alumina and method for production thereof**

(57)     A substrate made of transparent material (2) having a surface presenting a regular and orderly distribution of reliefs (12) or cavities (15) of nanometric dimensions is obtained with a method including the depositing of a layer of aluminium (6) on the substrate made of transparent material (2), and subsequent operations of anodization of the aluminium in order to obtain an alumina structure with an orderly distribution of pores (4) according to a pattern that is transferred onto the surface of the transparent substrate. The alumina can be used as sacrificial layer or else can remain as forming an integral part of the finished product. The method is performed in such a way as to obtain cavities or reliefs sized and arranged so as to bestow upon the transparent substrate anti-reflection properties, so as to increase the percentage of radiation transmitted by the transparent substrate at the wavelengths at which said anti-reflection properties are manifested. Alternatively, the method is carried out on a metal substrate, which is then used for the moulding of the transparent substrate.

FIG. 1

EP 1 785 748 A1

## Description

The present invention relates to a method for obtaining, on the surface of a substrate, a nanostructure presenting at least one between a series of reliefs and a series of cavities or interstices of nanometric dimensions, arranged according to a substantially orderly geometry, said method comprising the formation of at least one layer of anodized porous alumina to be used as an aid to the operation of formation of the nanostructure. A method of the type indicated above is described in the documents Nos. WO2004/079774A1 and WO2004/079056 A2, both filed in the name of the present applicant.

Components having surface structures or reliefs of nanometric dimensions ("nanostructures"), arranged according to definite geometries, are currently used in certain technological sectors, such as those of micro-electromechanical systems (MEMS), diffractive optics, medical devices, chemical and biological sensors, etc.

In the aforesaid document No. WO2004/079774A1, the present applicant has proposed a method for nanostructuring an emitter for an incandescent-light source, in which a layer of anodized porous alumina is used as sacrificial element for the purposes of nanostructuring the emitter. In said known solution, the emitter may be brought up to incandescence through the passage of an electric current. The nanostructuring of the emitter has the purpose of selectively increasing the absorption and hence the emission in a pre-determined region of the electromagnetic spectrum, thus increasing the brightness and/or efficiency of the emitter. The increase of the absorption implies, in a material that is opaque to electromagnetic radiation, such as the emitter of an incandescent source, a corresponding reduction of the reflectance.

The document No. WO2004/079056A2 referred to above claims the same priority as the document No. WO2004/079774A1 and also relates to a method of nanostructuring, carried out with the aid of anodized porous alumina, which is not limited exclusively to the field of light emitters but does not in any case regard obtaining a structure having anti-reflection properties.

The purpose of the present invention is to propose a new application of a method of nanostructuring carried out with the aid of anodized porous alumina that can be implemented in a simple and economically advantageous way and that will give rise to products usable to advantage in a plurality of different fields.

With a view to achieving said purpose, the subject of the invention is a method of the type indicated at the start of the present description, characterized in that:

- the aforesaid substrate is formed starting from material transparent to electromagnetic radiation for wavelengths belonging to one or more pre-determined ranges; and
- said nanostructure is formed so as to present anti-reflection properties in regard to electromagnetic radiation at least in part of one or more of the aforesaid pre-determined ranges of wavelengths, so as to increase the percentage of radiation transmitted by said substrate at the wavelengths for which said anti-reflection properties are manifested.

With the present invention a method is thus proposed for the construction of an anti-reflection structure on a substrate that is transparent to electromagnetic radiation in one or more pre-determined regions of the spectrum.

The method, in a way similar to what is proposed in the document No. WO 2004/079774 A1, comprises the formation of at least one layer of porous alumina, which in the case of the invention can be used either as sacrificial element for the purposes of structuring the substrate (as in WO 2004/079774) or also as element integrated in the substrate itself. The nanostructuring of the substrate enables an increase in the transmittance in the region of interest of the electromagnetic spectrum, in particular in the visible and/or ultraviolet and/or infrared.

By way of example, the method enables anti-reflection structures on glass to be obtained at a decidedly lower cost than that of known techniques, such as for example the deposition of dielectric multilayers or nanostructuring with optics of the "MOTH-EYE" type.

The method according to the invention enables fabrication in a simple and economically advantageous way of nanostructured transparent components, with reliefs or cavities of nanometric dimensions, having anti-reflection properties.

Possible applications of products obtained adopting the method according to the invention are for example transparent panels used for protecting objects on display, transparent panels for control boards, transparent panels for protecting instruments, in particular for example on dashboards of motor vehicles. In all these cases, the method according to the invention makes it possible to obtain, in a simple and economically advantageous way during the very process of production of the transparent panel, a panel equipped with anti-reflection properties, which thus favours viewing through the panel. A further advantageous application of the method according to the invention is the one aimed at producing windows for motor vehicles, for example windscreens, having an internal anti-reflection surface that enables the driver to acquire a better view of the external scene in so far as it prevents the formation by reflection on the window of the image of the dashboard of the motor vehicle.

In the method according to the invention, the use of an alumina layer enables a plurality of reliefs or cavities to be obtained in the context of the surface concerned, arranged according to a regular, orderly and pre-defined geometry.

The anodized porous alumina is preferably used as sacrificial element, but, as has been said, in general the alumina deposited on the substrate can continue to form an integral part of the substrate and have itself an anti-reflection function.

Further preferred and advantageous characteristics of the method according to the invention are indicated in the annexed claims, which are understood as forming an integral part of the present description.

Of course, the subject of the invention is also the product obtained with the method described above.

Further purposes, characteristics and advantages of the invention will emerge clearly from the ensuing description with reference to the annexed plate of drawings, which are provided purely by way of nonlimiting example and in which:

- Figure 1 is a schematic perspective view of a portion of a film of porous alumina;
- Figures 2-5 are schematic cross-sectional views aimed at illustrating some steps of the method used for obtaining the film of alumina of Figure 1;
- Figure 6 is a schematic perspective view of a portion of a first nanostructured film that can be obtained according to the invention;
- Figure 7 is a schematic perspective view of a portion of a second nanostructured film that can be obtained according to the invention;
- Figure 8 is a schematic illustration of the different steps of a first embodiment of the method according to the invention;
- Figure 9 is a schematic illustration of the different steps of a second embodiment of the method according to the invention,
- Figure 10 is a schematic illustration of the different steps of a third embodiment of the method according to the invention;
- Figure 11 is a schematic illustration of different steps of a fourth embodiment of the method according to the invention;

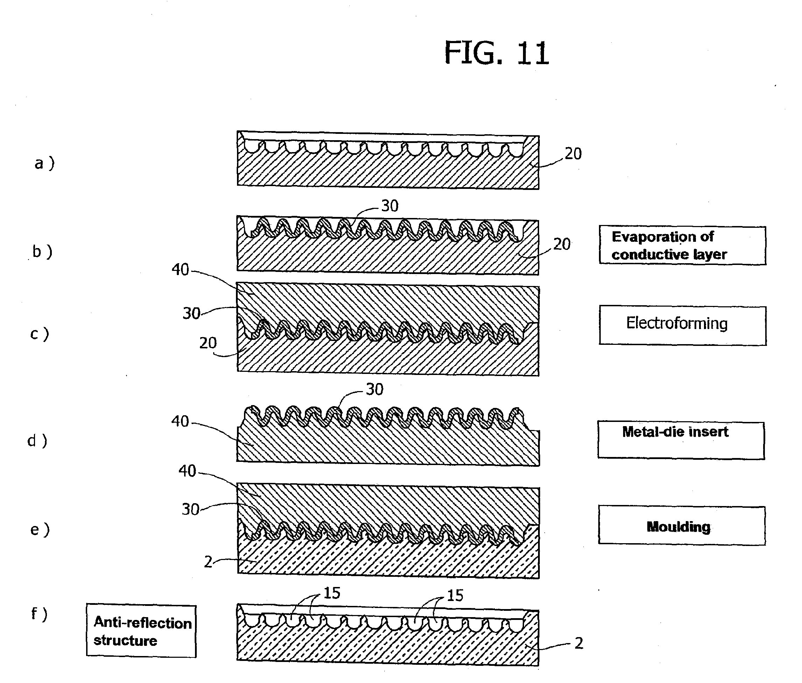

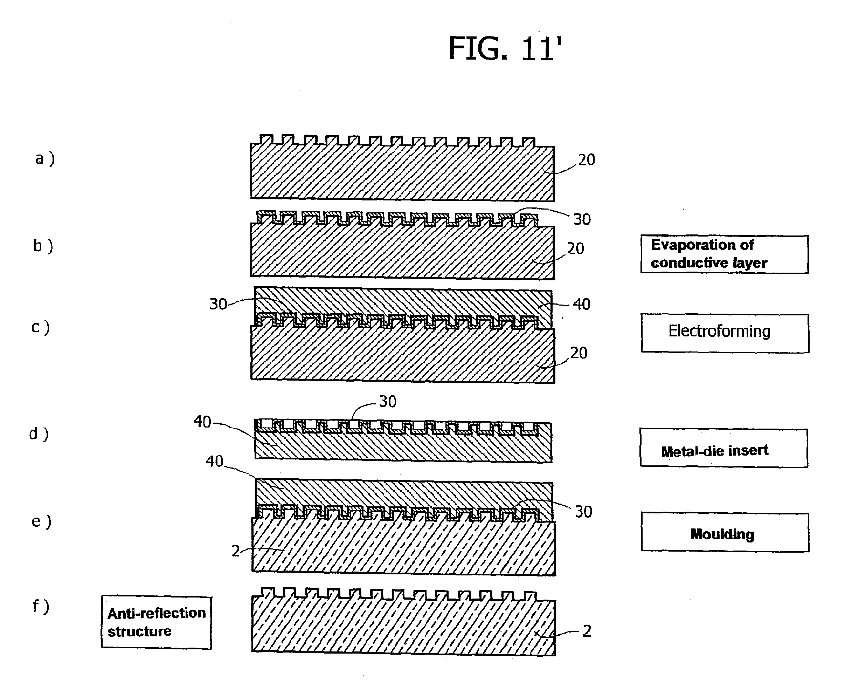

- Figure 11' refers to a first variant of the method of Figure 11;

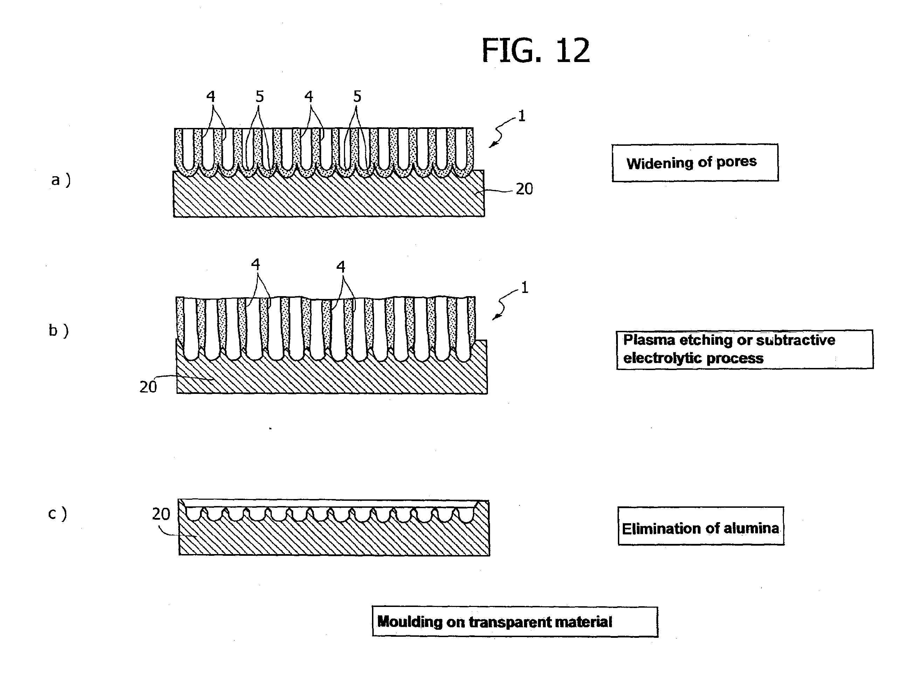

- Figure 12 refers to a second variant of the method of Figure 11;

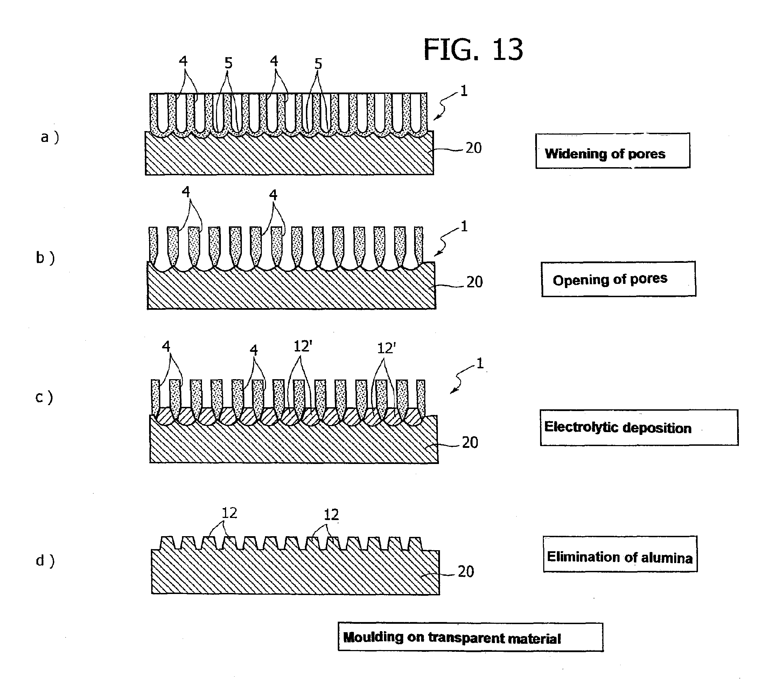

- Figure 13 refers to a variant of the method of Figure 11';

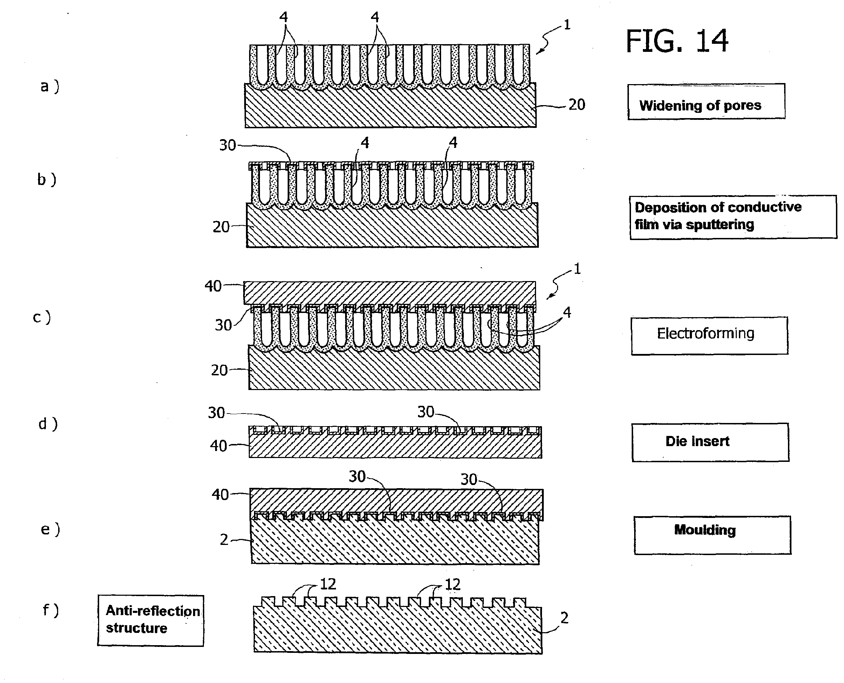

- Figure 14 refers to a further variant of the method of Figure 11';

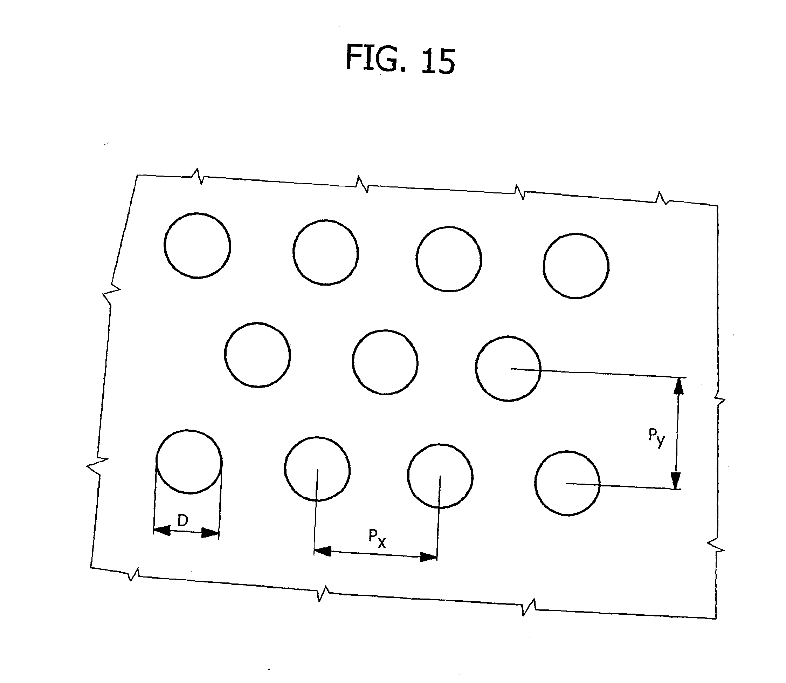

- Figure 15 is a schematic plan view of the nanostructured surface obtained with the method according to the invention; and

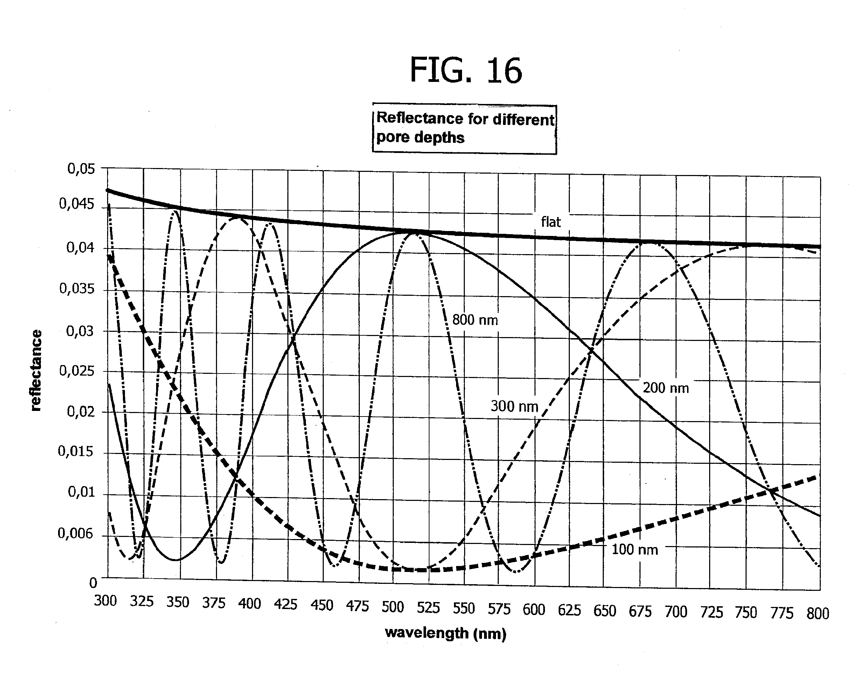

- Figures 16-19 are diagrams that illustrate the variation of reflectance as the geometrical parameters of the nanostructured surface obtained with the method according to the invention vary.

In all of its possible embodiments, the method according to the invention envisages the use of at least one film of anodized porous alumina with high regularity as active element or else as sacrificial element or template. According to the cases, the alumina layer provided is used directly for the purposes of formation of the anti-reflection nanostructured surface or else indirectly, for the purposes of the formation of a further sacrificial element necessary for obtaining the aforesaid nanostructured surface.

Porous-alumina structures have in the past attracted attention for applications such as dielectric films in aluminium capacitors, films for the retention of organic coatings and for the protection of aluminium substrates.

Porous alumina has a structure that can be represented ideally as a lattice of hollow columns immersed in an aluminium matrix. Porous alumina can be obtained via a process of anodization of sheets of aluminium of high purity or of aluminium films on substrates such as glass, quartz, silicon, tungsten, etc.

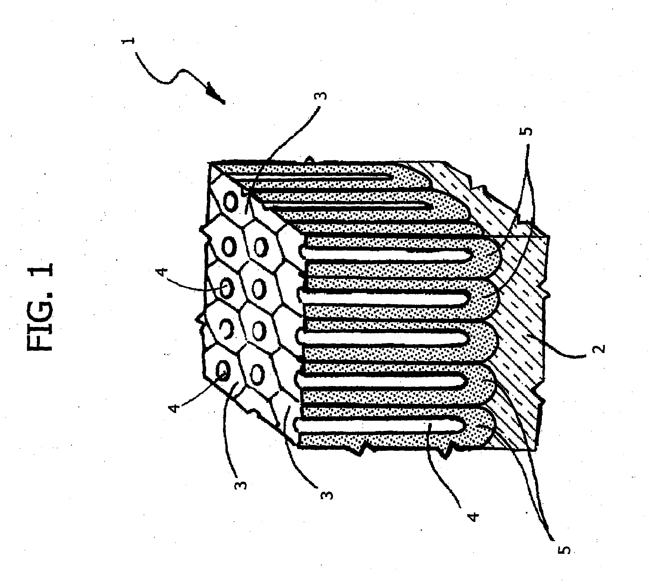

Figure 1 illustrates, merely by way of example, a portion of a film of porous alumina, designated as a whole by 1, obtained via anodic oxidation of an aluminium film on a suitable substrate, the latter being designated by 2. In the case of the present invention, said substrate is transparent to electromagnetic radiation for wavelengths belonging to one or more pre-determined ranges, for example in the visible and/or ultraviolet and/or infrared ranges of the spectrum. In the case of the invention, the substrate 2 is, for example, constituted by glass or transparent plastic material.

As may be noted in Figure 1, the alumina layer 1 is formed by a series of substantially hexagonal cells 3 directly adjacent to one another, each having a central straight hole that forms a hole or "pore" 4, substantially perpendicular to the surface of the substrate 2. The end of each cell 3 that is located in a position corresponding to the substrate 2 has a closing portion 5 having a substantially hemispherical geometry, the set of the closing portions 5 forming as a whole the non-porous part of the film 1, or "barrier layer".

As in the known art, the film can be developed with controlled morphology by appropriately choosing the electrolyte and the physical, chemical and electrochemical parameters of the process: in acidic electrolytes (such as phosphoric acid, oxalic acid, and sulphuric acid) and in adequate process conditions (voltage, current, stirring and temperature), it is possible to obtain porous films with high regularity. For this purpose, the dimensions and the density of the cells 3, the diameter of the pores 4, and the height of the film 1 can be varied. For example, the diameter of the pores 4, which is typically 50-500 nm, can be enlarged or restricted via chemical treatments.

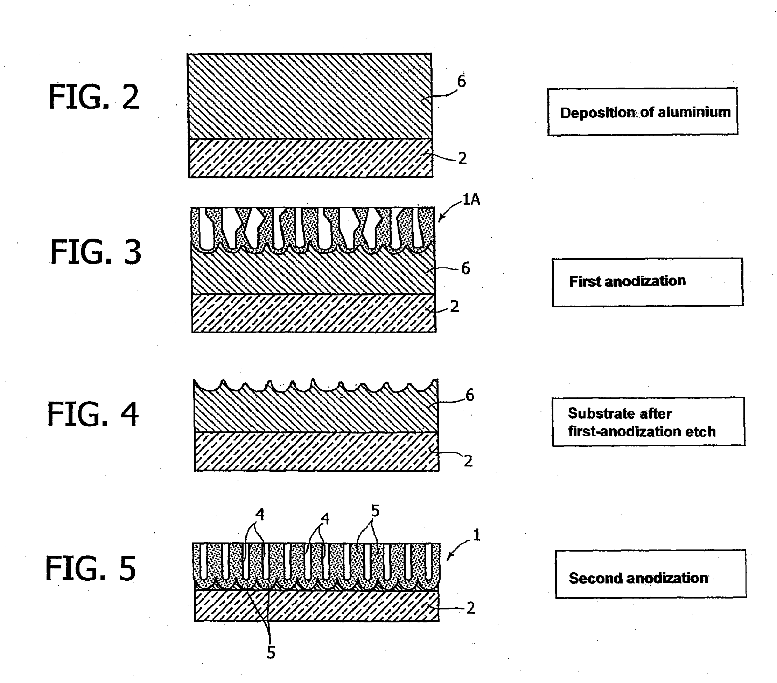

As represented schematically in Figure 2, the first step of the formation of a film 1 of porous alumina is the deposition of a layer of aluminium 6 on the transparent substrate 2. This operation involves a deposition of materials of high purity with thicknesses of from a few hundreds of nanometres up to 30 micron. In the present invention, the layer 6 is obtained by means of conventional techniques of thermal evaporation, and e-beam evaporation and sputtering.

The step of deposition of the layer of aluminium 6 is followed by a step of anodization of the layer itself. The process of anodization of the layer 6 can be carried out using different electrolytic solutions according to the size of the pores 4 that are to be obtained and the distance between them. Given the same electrolyte, the concentration, the current density, and the temperature are the parameters that most affect the size of the pores 4. The configuration of the electrolytic cell is equally important to achieve a correct distribution of the lines of force of the electrical field, with corresponding uniformity of the anodic process.

Figure 3 is a schematic illustration of the result of the first anodization of the layer of aluminium 6 on the substrate 2. As represented schematically, the film of alumina 1A obtained via the first anodization of the layer 6 does not enable a regular structure to be obtained. In order to obtain a highly orderly structure, of the type of the one designated by 1 in Figure 1, it thus becomes necessary to carry out succesisive processes of anodization, and in particular at least:

   i) a first anodization, the result of which is the one visible in Figure 3;
   ii) a step of elimination, via etching, of the film of alumina 1A, obtained by means of acidic solutions (for example $CrO_3PO_4$) and the result of which is illustrated in Figure 4, which shows schematically the substrate 2 subsequent to the etching step;
   iii) a second anodization of the part of the nanostructured aluminium film remaining after etching; and
   iv) a step of widening of the pores, carried out in the same electrolyte as for the previous anodization, for the purpose of achieving the correct factor of filling to obtain anti-reflection properties.

The etching step referred to in point ii) is important for defining, on the residual part of aluminium, preferential areas of growth of the alumina itself in the second step of anodization.

By carrying out a number of times the successive etching and anodization operation, the structure improves until it becomes very uniform, as represented schematically in Figure 5, where the film of alumina designated by 1 is regular and orderly.

As will be seen from what follows, in certain embodiments of the method according to the invention, after obtaining the film 1 of regular porous alumina a step of total or localized elimination of the barrier layer defined by the portions 5 is carried out. The barrier state renders the alumina structure insulating and protects the underlying substrate 2. The reduction of said layer is consequently fundamental for the purposes of carrying out possible subsequent processes of electrodeposition, in which an electrical contact is necessary, and of etching, for the cases in which three-dimensional nanostructures are to be created directly on the substrate 2.

The aforesaid process of elimination or reduction of the barrier layer can envisage two successive stages:

   - widening of the pores 4, carried out in the same electrolyte as that of the previous anodization, without passage of current; and
   - reduction of the barrier layer, carried out by means of passage of very low current in the same electrolyte as the one used for the preceding anodization; in this step, the equilibrium typical of the anodization is not reached, so that the etching process is favoured with respect to that of formation of the alumina.

As previously mentioned, according to the invention, the film of alumina 1 generated by means of the process previously described is used directly as active anti-reflection film or else as template for nanostructuring, i.e., as base for the construction of structures that reproduce the same pattern of the alumina on the transparent substrate. As will be seen, according to the implementation chosen, it is thus possible to obtain negative nanostructures, i.e., ones substantially complementary to the alumina and hence having columns in positions corresponding to the pores 4 of the film 1, or else positive nanostructures, i.e., ones substantially identical to the alumina and hence with cavities in positions corresponding to the pores 4 of the film 1.

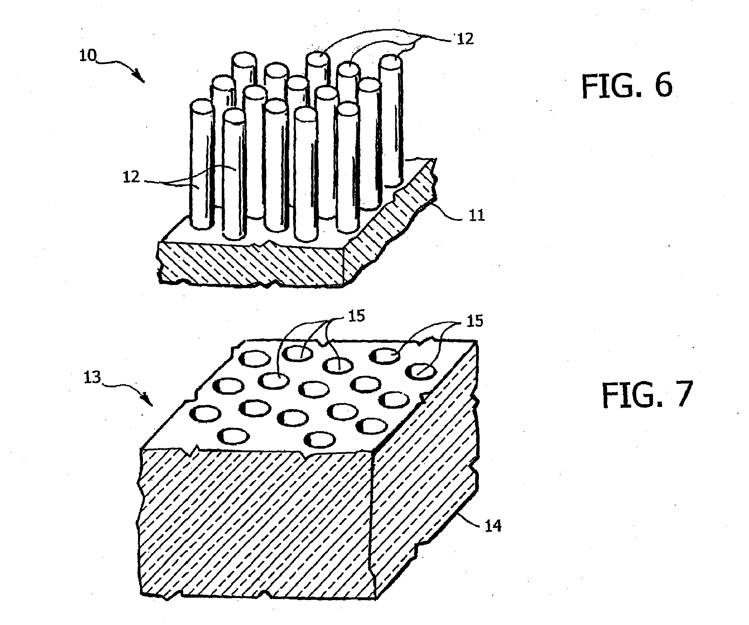

Figures 6 and 7 are partial schematic illustrations of two nanostructured films, which are appropriately sized and possess anti-reflection properties, having the two aforesaid types of structures that can be obtained in accordance with the invention. The film designated by 10 in Figure 6 has the aforesaid negative structure, distinguished by a base portion 11, from which the aforesaid columns designated by 10 branch off. The film designated by 13 in Figure 7 has the aforesaid positive structure, distinguished by a body 14 in which the aforesaid cavities, designated by 15, are defined.

The techniques proposed for the purposes of fabrication of the structured film 10, 13 illustrated in Figures 6 and 7 can be of various types according to the material used as transparent substrate, and in particular can envisage any one of the following processes:

   - subtractive process of wet etching;
   - subtractive process of plasma etching;
   - additive process by means of silk-screen printing, or sol-gel or chemical vapour deposition (CVD) of transparent glass material, such as $SiO_2$; and
   - hybrid process, in which the alumina structure is replicated with subtractive and/or additive processes for the production of a master die to be used for injection moulding or for hot embossing of a substrate made of transparent material, for example made of plastic material, reproducing the desired nanostructure.

In what follows, some of said embodiments of the method according to the invention are described in detail.

First embodiment

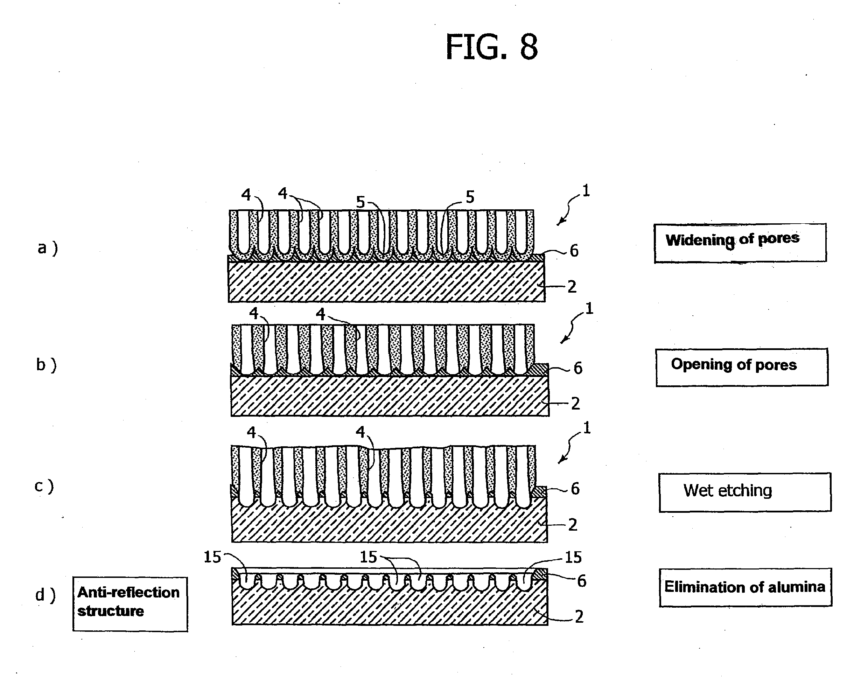

Figure 8 is a schematic illustration of some steps of a first embodiment of the method according to the invention, provided for the purposes of transfer of the pattern of alumina on the substrate so as to obtain a positive structure of the type illustrated in Figure 7.

The first five steps of the method consist of at least one first and one second anodization of a respective layer of aluminium on a suitable transparent substrate and of widening of the pores (Figure 8a) according to what has been described previously with reference to Figures 2-5. For this embodiment, it is fundamental to eliminate the barrier layer defined by the bottom portions 5 of the pores 4 (Figure 8a) by means of passage of very low current in the same electrolyte as the one used for the previous anodizations. The substrate 2 can, for example, be made of glass, and the layer of aluminium necessary for the anodizations can be deposited via sputtering or evaporation (either e-beam or thermal evaporation).

After obtaining the film 1 with a regular and orderly alumina structure, the pattern is transferred to the substrate 2 by means of wet etching (for example, for glass it is possible to use HF-based acidic solutions), controlling the final height of the structure on the substrate (Figure 8c).

This is followed by the elimination of the alumina via etching in appropriate acidic solutions such as, for example, $CO_3$ and $H_3PO_4$ (Figure 8d).

The substrate 2 thus obtained manifests anti-reflection properties in regard to magnetic radiation at least in part of one or more of the pre-determined ranges of wavelengths to which the substrate 2 is transparent. In this way, the substrate 2 has a high percentage of radiation transmitted at the wavelengths for which it manifests the aforesaid anti-reflection properties. The pattern and the dimensions of the cavities 15 obtained on the surface of the substrate are chosen so as to obtain the desired anti-reflection properties, as will be described in detail in what follows.

Second embodiment

As in the case of the first embodiment, the second embodiment of the invention envisages the transfer of the pattern of alumina onto the substrate so that a positive structure 13 of the type illustrated in Figure 7 is obtained.

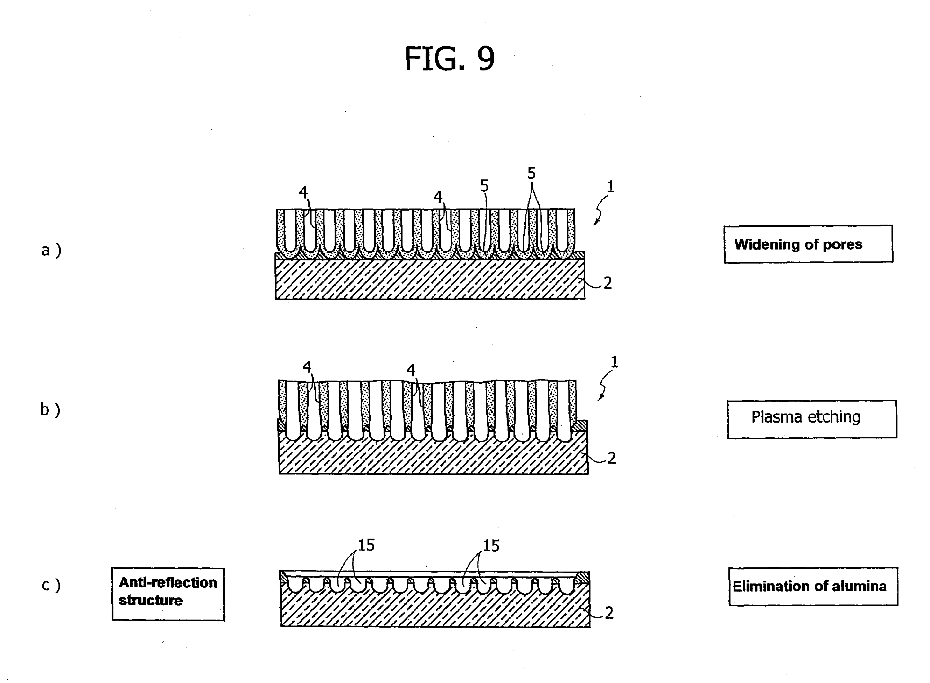

After the film 1 with regular and orderly alumina structure (Figure 9a, corresponding to Figure 8a and to Figure 5) has been obtained, the pattern is transferred to the substrate by means of plasma etching, controlling the final height of the structure. The method can be implemented, as in the previous case, on any transparent substrate, such as glass, plastic, or the like (Figure 9b).

The film of alumina is next eliminated via etching in appropriate acidic solutions such as for example $CrO_3$ and $H_3PO_4$.

As compared to the first embodiment illustrated in Figure 8, the second embodiment presents the advantage of not calling for the operation of opening of the pores, which occurs simultaneously to the transfer of the pattern onto the substrate by means of the operation of plasma etching.

Third embodiment

This embodiment envisages the fabrication of negative structures of the same type as the structure 10 of Figure 6, with initial steps similar to those of the embodiments described above and corresponding to the operations illustrated in Figures 2-5.

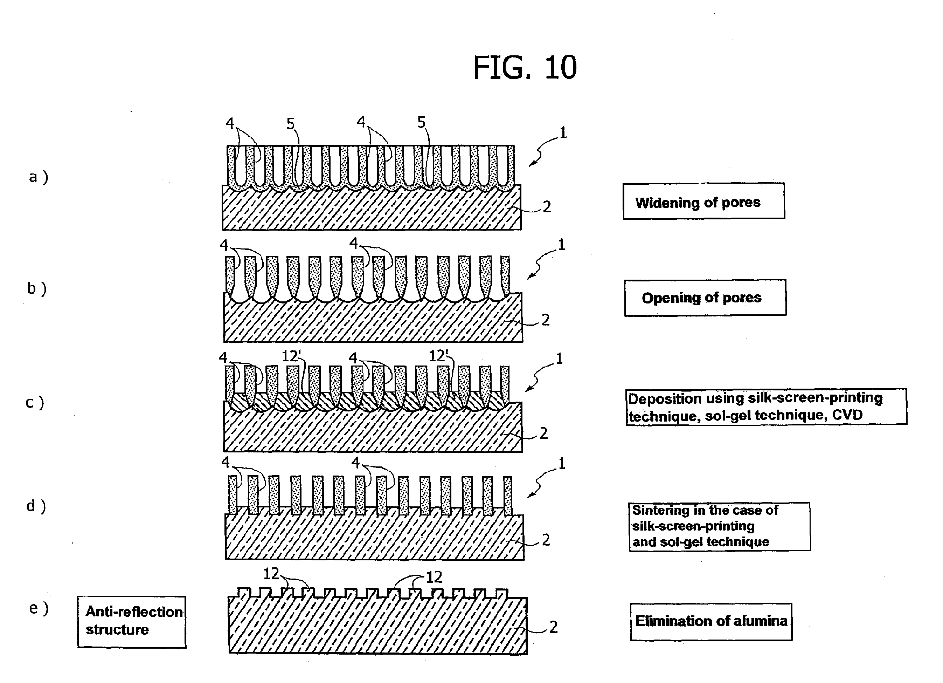

As illustrated in Figures 10a and 10b, the second anodization is in this case followed by a step of elimination of the barrier layer 5, carried out by means of passage of very low current in the same electrolyte as the one used for the previous anodizations. This step is followed by a deposition of a material by means of different technologies:

- silk-screen printing: a silk-screen-printing paste with glass or plastic matrix is deposited on the alumina structure and, by means of treatment in vacuum conditions, goes to fill the pores of the latter;
- sol-gel: a precursor solution (for example, of the tetraethoxysilane (TEOS) type) is deposited by means of spin coating on the alumina structure and by means of treatment in vacuum conditions goes to fill the pores of the latter;
- chemical vapour deposition (CVD) of glass or in any case transparent materials, a characteristic of which is the use of a reaction chamber with the presence of reducing gases that enable the penetration of the material to be deposited within the hollow pores of alumina, guaranteeing the faithful reproduction of structures with high aspect ratio (see deposits 12' in Figure 10c).

In the case of silk-screen printing and sol-gel, the aforesaid operation is followed by a step of sintering of the material (Figure 10d).

In all the cases proposed, the alumina layer 1 is then eliminated via etching in appropriate acidic solutions, such as for example $CrO_3$ and $H_3PO_4$.

Also in this case, the transparent substrate obtained has a pattern and dimensions of the reliefs 12 chosen so as to bestow thereon the desired anti-reflection properties.

Fourth embodiment

This embodiment of the method according to the invention is provided for the purposes of the production of positive or negative structures of the same type as those of Figures 6 and 7, starting from a template obtained in accordance with the previous embodiments.

Said embodiment is based upon the creation of a copy of the structure, obtained by means of the previous embodiments, so as to obtain a metal lamina having, on one surface, the nanometric pattern that is to be used as die for injection moulding or hot embossing on transparent plastic or glass materials.

Figure 11a shows the case where the starting point is a structure obtained by means of the first embodiment described above (Figure 8) or else by means of the second embodiment described above (Figure 9), with the difference that, in this case, the substrate 20 on which the method of Figure 8 or of Figure 9 is implemented is not necessarily a transparent substrate and may consequently be, for example, either glass or a non-transparent plastic material, metal, silicon, etc.

Once the master 20 (Figure 11a) has been obtained in the desired material, the process continues with the application, on the surface of the master, of a conductive metal layer 30 by means of vaporization in vacuum conditions (Figure 11b). By means of electroforming techniques (Figure 11c) there is thus produced a die 40 of metal material, which is then used (Figure 11e) for injection moulding or hot embossing of a transparent substrate (for example, made of glass or plastic material) having a positive configuration of the type illustrated in Figure 7 (Figure 11f).

Figure 11' illustrates the similar method used starting from a substrate 20, not necessarily made of transparent material, having a negative configuration, which is obtained with the method according to the third embodiment described above (Figure 10). Also in this case a step of evaporation of a conductive layer 30 is performed (Figure 11'b), a die 40 is produced using the electroforming technique (Figures 11'c and d), and said die is used for the production of a transparent substrate 13, obtained by means of injection moulding or hot embossing, having a negative configuration of the type of Figure 6 (Figures 11'e and 11'f).

Both of the transparent substrates 13 of Figures 11f and 11'f present the desired anti-reflection properties thanks to the conformation of the nanostructured surface.

Figure 12 illustrates a further example of method for obtaining a metal die usable for the moulding of a transparent substrate with nanostructured surface. In this case, the substrate 20 (Figure 11a) used at the start of the fourth embodiment of the method according to the invention can be obtained with the method of Figure 9, which is illustrated substantially in Figure 12, with the difference that it is applied this time to a metal substrate. Furthermore, in this case, instead of the technique of plasma etching, it is possible to use a subtractive electrolytic process for transferring the pattern from the porous alumina to the metal substrate 20 (Figures 12a and 12b). In the case of Figure 12, the electrolytic process is hence of the type suitable for removing material.

Also in the case of the embodiment of Figure 12, the component 20 finally obtained (Figure 12c) is used as master for the fabrication of a die usable in the moulding of a transparent substrate with nanostructured surface, in a way similar to what is illustrated in Figure 11.

Figure 13 shows a further variant of the fourth embodiment of the method according to the invention, in which the metal substrate 20 with nanostructured surface, illustrated in Figure 11'a, is obtained with a method similar to that of Figure 10. In this case, the transfer of the pattern of the porous alumina onto the metal substrate 20 is obtained by means of an electrolytic process of deposition of metal material to obtain the master that constitutes the die.

A further possible method for the fabrication of the die used in the fourth embodiment of the method according to the invention comprises the following steps (see Figure 14):

- obtaining alumina as in the previous cases (Figure 14a, see also Figures 2-5) on a substrate 20 of any suitable type;
- depositing, in vacuum conditions, a conductive film 30 (Figure 14b) by means of sputtering (the sputtering technique typically enables only the top part of the pores to be filled);
- electrodepositing a layer 40 of metal material (Figure 14c); and
- using the metal component 40 thus obtained as master die (Figure 14d), which can be copied by means of electroforming techniques for the generation of other inserts.

The die 40 is introduced into a machine for injection moulding or hot embossing to obtain a transparent substrate of thermoplastic material or mouldable glass material 2 (Figures 14e and f) with nanostructured surface. The process of moulding of the glass material can be of the powder-injection-moulding type.

Each of the methods described above enables structuring of the matrix of porous alumina, schematically represented in Figure 15, to be obtained on the surface of the transparent material. The anti-reflection properties of said structuring are manifested markedly when this presents appropriate geometrical characteristics. The parameters that are important for the purposes of the characterization of the optical properties of said structure are:

1) the depth H of the structuring within the substrate;
2) the diameter D of the cavities/pillars; and
3) the period P of the structuring (i.e., the distance between the centres of two adjacent cavities/pillars in the two orthogonal directions, designated by $P_x$ and $P_y$ in Figure 15. Typically, three cavities/pillars that are immediately adjacent to one another form the vertices of a substantially equilateral triangle. In

this case, $P_x$ and $P_y$ are linked to one another by the following relation:

$$P_y = \sqrt{3} \cdot P_x$$

Figure 16 shows the change in the reflectance of a plane plate of glass BK7 as a function of the wavelength for different depths of the structuring:

1) zero depth ("flat"): the surface is flat and has the pattern of the reflectance typical of a plane plate of glass;
2) depth 100 nm: the reflectance assumes values lower than 0.01 in the range of wavelengths 400 nm-725 nm;
3) depth greater than 100 nm: the reflectance has multiple minima; the total range of wavelengths for the reflectance to assume values lower than 0.01 is narrower than in the previous case.

The depth of 100 nm of the structure therefore appears preferable because it gives rise to a single minimum that is sufficiently wide to cover substantially all the visible band. It is possible in any case to envisage selection of a depth comprised between 80 and 120 nm.

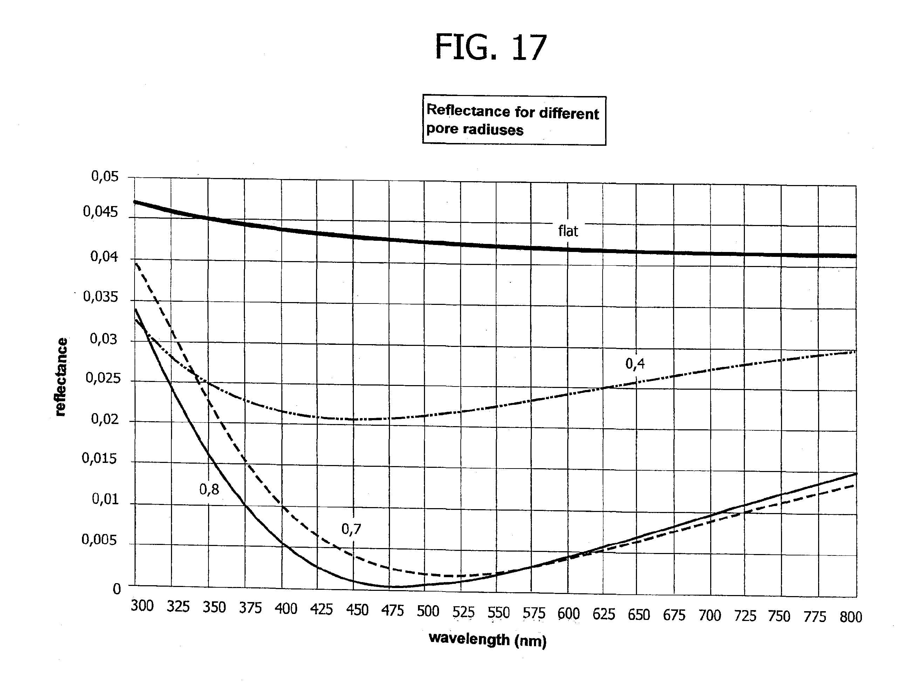

Figure 17 shows, once again for a plane plate of glass BK7, with the depth of the structuring fixed to the optimal value of 100 nm, the variation of the reflectance as a function of the wavelength for different ratios between the diameter of the cavity and the period $P_x$ of the structuring:

1) ratio 0.00: the cavity has zero radius, the surface is flat, and the typical pattern of a plane plate of glass is obtained;
2) ratio 0.8: the reflectance assumes values lower than 0.01 in the range 375 nm-700 nm, with a substantially zero minimum at 484 nm; and
3) intermediate values of the ratio: the reflectance always assumes higher values than in the previous case.

The ratio 0.8 between the diameter of the cavity and the period $P_x$ of the structure is found to be preferable, because it gives rise to a substantially zero minimum, and the value of reflectance is lower than 0.01 in the visible band. It is possible in any case to select a value of said ratio comprised between 0.75 and 0.85.

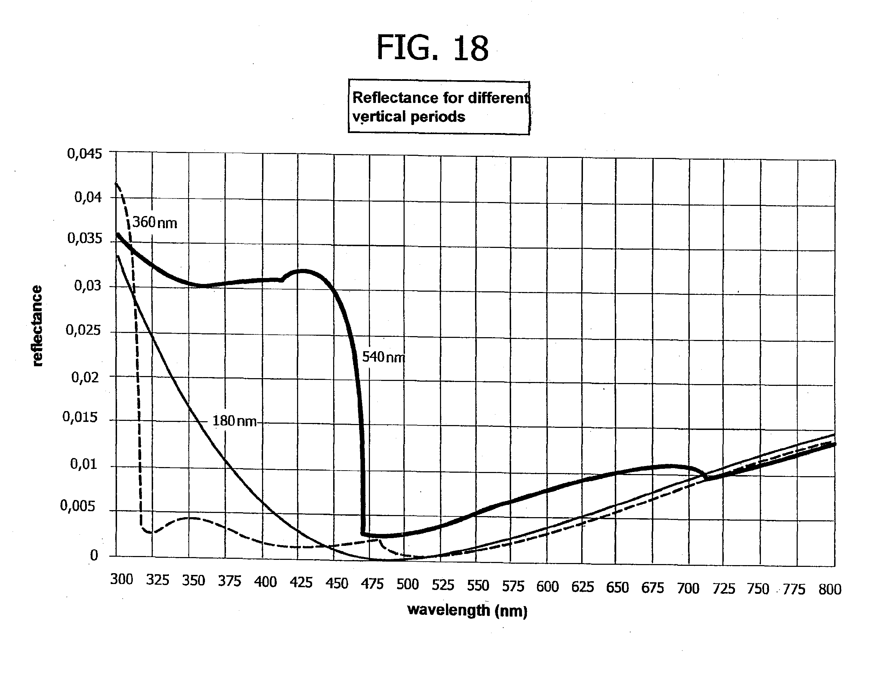

Figure 18 shows, with the depth of the structuring fixed at 100 nm and the ratio between the diameter of the cavity and the period $P_x$ of 0.8, the variation of the reflectance (once again for a plane plate of glass BK7) as a function of the wavelength for different values of the period $P_x$: when the period $P_x$ becomes greater than 180 nm the characteristic dimensions of the structure start to be comparable with the wavelength of interest and manifest a sudden increase of the reflectance due to the appearance of additional reflected orders (for shorter periods the single-order reflection is instead the order 0); the optimal period is consequently lower than 200 nm.
To sum up, the optimal parameters for a nanostructure on a transparent substrate with anti-reflection properties are:

1) depth of the cavity between 80 and 120 nm, preferably 100 nm;
2) period $P_x$ less than 200 nm; and
3) diameter of the pore/pillar of 0.75-0.85, preferably 0.8 times the corresponding period $P_y$.

The methods previously described also enable a structure homologous to the previous one to be obtained, i.e., a pillar structure characterizable through the definition of:

1) height of the pillars
2) diameter of the pillars
3) period of the structure, i.e., distance between the centres of two adjacent pillars.

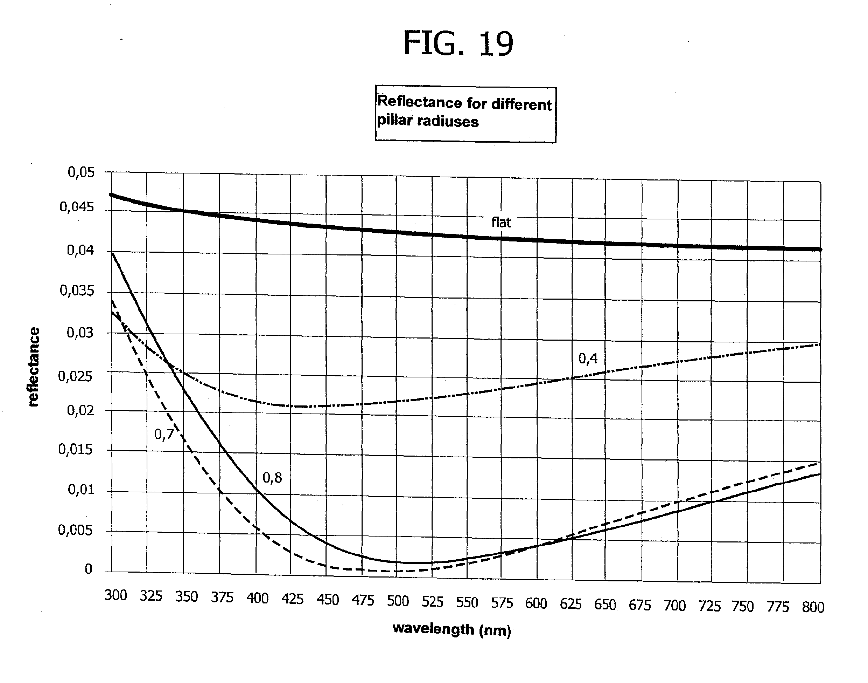

The behaviour of said structure is similar to that of porous alumina, so that the preferable height is 80-120 nm, preferably 100 nm, and the period $P_x$ is less than 200 nm. The behaviour differs instead for the variation of the reflectance as a function of the wavelength as the diameter of the pillar varies: Figure 19 shows, with the height of the pillars fixed at 100 nm, the pattern of the reflectance as a function of the wavelength for different ratios between the diameter of the pillar and the period $P_x$ of the structuring:

1) ratio 0.00: the pillar has zero radius, the surface is flat, and the typical pattern of a plane plate of glass is obtained;
2) ratio 0.7: the reflectance assumes values lower than 0.01 in the range 375 nm-700 nm, with substantially zero minimum at 484 nm; and
3) intermediate values: the reflectance always assumes values higher than in the previous case.

The optimal value is therefore 0.65-0.75, preferably 0.7.
To sum up, the optimal parameters for a transparent substrate with pillar nanostructure, with anti-reflection properties, are:

1) height of pillars 80-120 nm, preferably 100 nm;
2) period $P_x$ less than 200 nm; and
3) diameter of the pillar 0.65-0.75, preferably 0.7 times the corresponding vertical period.

Of course, without prejudice to the principle of the invention, the details of construction and the embodiments may vary widely with respect to what is described and illustrated herein purely by way of example, without thereby departing from the scope of the present invention.

**Claims**

1. A method for obtaining, on the surface of a substrate (2), a nanostructure (10; 13) presenting at least one between a series of reliefs (12) and a series of cavities or interstices (15) of nanometric dimensions, arranged according to a substantially orderly geometry, said method comprising the formation of at least one layer of anodized porous alumina (1) to be used as aid to the operation of formation of the nanostructure,
said method being **characterized in that**:

   - the aforesaid substrate (2) is formed starting from material transparent to electromagnetic radiation for wavelengths belonging to one or more pre-determined ranges of wavelengths; and
   - said nanostructure is formed so as to present anti-reflection properties in regard to electromagnetic radiation at least in part of one or more of the aforesaid pre-determined ranges of wavelengths, so as to increase the percentage of radiation transmitted by said substrate (2) at said wavelengths, at which the aforesaid anti-reflection properties are manifested.

2. The method according to Claim 1, **characterized in that**:

   - said substrate (2) made of transparent material is provided;
   - a layer (6) of aluminium is deposited on top of said substrate (2);
   - a first anodization of the layer of aluminium (6) is performed until a structure (1a) of alumina is obtained defining a plurality of pores (4) substantially perpendicular to the surface of the substrate (2), the alumina layer (1) having a barrier layer defined by the bottom portions (5) of the pores (4) adjacent to the substrate (2);
   - the layer of anodized porous alumina (1A) is removed from the bottom residual layer of aluminium (6) by means of an etching operation; and
   - at least one second anodization of the residual layer (6) of aluminium is performed until an alumina structure (1) is obtained defining a plurality of pores (4) substantially perpendicular to said surface of the substrate (2), the alumina layer (1) having a barrier layer defined by the bottom portions (5) of the pores (4) adjacent to the substrate (2).

3. The method according to Claim 2, **characterized in that** once the aforesaid new structure of porous alumina has been obtained on top of the transparent substrate, an operation of elimination or reduction of the aforesaid barrier layer adjacent to the substrate (2) is carried out.

4. The method according to Claim 3, **characterized in that** said step of elimination or reduction of the alumina barrier layer comprises:

   - a first step of widening of the pores (4), carried out within the same electrolyte used in the preceding operation of anodization, without passage of current; and
   - a second step of reduction of the barrier layer in contact with the transparent substrate (2), carried out by means of passage of very low current in the same electrolyte as that used for the preceding anodization.

5. The method according to Claim 4, **characterized in that**, subsequent to the reduction or elimination of the barrier layer, an operation of transfer of the pattern of the alumina to the transparent substrate (2) is carried out by means of a wet-etching operation.

6. The method according to Claim 5, **characterized in that**, subsequent to the aforesaid wet-etching operation, an operation of elimination of the alumina is carried out by etching, so as to obtain the single transparent substrate with a nanostructured surface shaped so as to present anti-reflection properties.

7. The method according to Claim 3, **characterized in that**, after obtaining the aforesaid second alumina structure (1), an operation of plasma etching is carried out, by means of which both the removal of the barrier layer adjacent to the transparent substrate (2) and the transfer of the pattern of the alumina to the transparent substrate (2) are obtained.

8. The method according to Claim 4, **characterized in that**, subsequent to removal of the alumina barrier layer, an operation of deposition of an additional material (12') within the pores (4) of the alumina structure (1) is carried out and, subsequent to said operation, an operation of elimination of the alumina structure by means of etching in acidic solution is carried out so as to obtain a transparent substrate (2) having a nanostructured surface with a plurality of nanometric reliefs 12 according to a regular and orderly arrangement.

9. The method according to Claim 8, **characterized in that** the aforesaid operation of deposition is carried out by depositing of a silk-screen-printing paste with glass or plastic matrix and treatment in vacuum conditions.

**10.** The method according to Claim 8, **characterized in that** the aforesaid operation of deposition is carried out using the sol-gel technique by depositing via spin coating a precursor solution and by treating in vacuum conditions in order to obtain filling of the pores (4) in the alumina structure.

**11.** The method according to Claim 8, **characterized in that** the aforesaid operation of deposition is carried out using the technique of chemical vapour deposition (CVD) of transparent glass or synthetic materials in a reaction chamber in the presence of reducing gases in order to obtain penetration of the material deposited within the pores (4) of the alumina structure (1).

**12.** The method according to Claim 9 or Claim 10, **characterized in that**, subsequent to the aforesaid operation of deposition, an operation of sintering of the material deposited and of the transparent substrate is carried out.

**13.** The method according to Claim 1, **characterized in that** the aforesaid substrate made of transparent material (2) with nanostructured surface is obtained by moulding with the aid of a die element having a nanostructured surface complementary to the one sought, and **in that** said die element (40) having nanostructured surface is obtained with the aid of a layer of anodized porous alumina.

**14.** The method according to Claim 13, **characterized in that** said die element (40) is obtained starting from a master element (20) in a material that is not necessarily transparent, for example a metal material, having a conformation identical to that of the transparent substrate (2) that it is desired to obtain.

**15.** The method according to Claim 14, **characterized in that** the aforesaid die element (40) is obtained starting from the aforesaid master element (20) after an operation of coating of the nanostructured surface of the master element (20) with a conductive metal layer (30), and a subsequent operation of production of the die element (40) by means of the electroforming technique.

**16.** The method according to any one of Claims 13-15, **characterized in that** the master element (20) has a nanostructured surface presenting a series of cavities.

**17.** The method according to any one of Claims 13-15, **characterized in that** the master element (20) has a nanostructured surface presenting a series of reliefs.

**18.** The method according to Claim 15, **characterized in that** the aforesaid master element (20) is obtained by carrying out one or more successive operations of anodization of a layer of aluminium deposited on top of a metal substrate (20), removing the alumina barrier layer in contact with the metal substrate, and using the pores (4) of the alumina structure (1) for transferring the pattern of the alumina onto the surface of the metal substrate (20).

**19.** The method according to Claim 18, **characterized in that** the transfer of the pattern of alumina onto the surface of the metal substrate (20) is carried out by means of plasma etching.

**20.** The method according to Claim 18, **characterized in that** the transfer of the pattern of alumina onto the metal substrate (20) is carried out by means of an electrolytic method of removal of the material.

**21.** The method according to Claim 18, **characterized in that** the transfer of the pattern of alumina onto the surface of the metal substrate (20) is carried out by means of an electrolytic method of deposition of material.

**22.** The method according to Claim 13 or Claim 14, **characterized in that** the die element (40) is obtained by providing a substrate (20) of a material not necessarily transparent, for example metal material, carrying out one or more successive anodizations of a layer of aluminium deposited on top of said substrate (20), depositing in vacuum conditions a conductive film (30) on top of the layer (1) of alumina by means of a technique of sputtering in such a way as to fill only the top part of the pores (4) of the alumina layer (1), and depositing a layer of metal material (40) by means of techniques of electrodeposition on top of the alumina layer (1) so as to obtain the aforesaid die element (4) or an element to be used as master for the production of a die element, by means of the electroforming technique.

**23.** The method according to Claim 1, **characterized in that** the aforesaid nanostructured surface of the transparent substrate (2) is obtained in such a way as to present a quincuncial arrangement of the aforesaid cavities (4) or of the aforesaid reliefs (12), according to a number of parallel rows extending in a first direction X, and set at a uniform distance apart from one another in a second direction Y orthogonal to the first direction X, the components of each row being staggered in the first direction X with respect to the components of the immediately adjacent rows.

**24.** The method according to Claim 23, **characterized in that** cavities (4) or reliefs (12) are obtained having a height in the region of approximately 80-120 nm, preferably of approximately 100 nm, in order to obtain a low reflectance in a relatively wide range of wavelengths.

**25.** The method according to Claim 24, in which the transparent substrate (2) has a plurality of cavities (4) or reliefs (12), **characterized in that** the period $(P_x)$ of the distribution of the cavities or reliefs in the aforesaid first direction X is less than 200 nm.

**26.** The method according to Claim 25, in which the transparent substrate (2) is obtained with a nanostructured surface presenting a plurality of cavities, **characterized in that** the ratio between the diameter (D) of each cavity and the period $(P_x)$ of the distribution of said cavities in the aforesaid first direction X is in the region of approximately 0.75-0.85, preferably approximately 0.8, in order to give rise to low values of reflectance in the range of the wavelengths of visible radiation.

**27.** The method according to Claim 25, in which the transparent substrate (2) is obtained with a nanostructured surface presenting a plurality of reliefs (12), **characterized in that** the ratio between the diameter (D) of each relief and the period $(P_x)$ of the distribution of said reliefs in the aforesaid first direction X is in the region of approximately 0.65-0.75, preferably approximately 0.7, in order to give rise to low values of reflectance in the range of the wavelengths of visible radiation.

**28.** The method according to Claim 1, **characterized in that** the structure of porous alumina constitutes a sacrificial layer, which is used for transferring the pattern of the porous alumina onto the transparent substrate, and is then eliminated.

**29.** The method according to Claim 2, **characterized in that** the structure of porous alumina is used for transferring the pattern of the porous alumina onto the transparent substrate, and then remains, at least partially, as forming an integral part of the transparent substrate with anti-reflection properties.

**30.** A substrate made of transparent material, **characterized in that** it is obtained with a method according to one or more of the preceding claims.

**31.** A substrate made of transparent material, **characterized in that** it is obtained with the method of Claim 1, and that the nanostructured surface of the transparent substrate (2) has a quincuncial arrangement of the aforesaid cavities (4) or of the aforesaid reliefs (12), according to a number of parallel rows extending in a first direction X, and set at a uniform distance apart from one another in a second direction Y orthogonal to the first direction X, the components of each row being staggered in the first direction X with respect to the components of the immediately adjacent rows.

**32.** The substrate according to Claim 31, **characterized in that** said cavities (4) or reliefs (12) have a height in the region of approximately 80-120 nm, preferably of approximately 100 nm, so as to present a low reflectance in a relatively wide range of wavelengths.

**33.** The substrate according to Claim 31, **characterized in that** the period $(P_x)$ of the distribution of said cavities (4) or reliefs (12) in the aforesaid first direction X is less than 200 nm.

**34.** The substrate according to Claim 33, **characterized in that** the nanostructure has a plurality of cavities, and **in that** the ratio between the diameter (D) of each cavity and the period $(P_x)$ of the distribution of said cavities in the aforesaid first direction X is in the region of approximately 0.75-0.85, preferably approximately 0.8, in order to give rise to low values of reflectance in the range of the wavelengths of visible radiation.

**35.** The substrate according to Claim 33, **characterized in that** the transparent substrate (2) has a nanostructured surface presenting a plurality of reliefs (12), and **in that** the ratio between the diameter (D) of each relief and the period $(P_x)$ of the distribution of said reliefs (12) in the aforesaid first direction X is in the region of approximately 0.65-0.75, preferably approximately 0.7, in order to give rise to low values of reflectance in the range of the wavelengths of visible radiation.

# FIG. 1

EP 1 785 748 A1

EP 1 785 748 A1

FIG. 2

6

2

Deposition of aluminium

FIG. 3

1A

6

2

First anodization

FIG. 4

6

2

Substrate after
first-anodization etch

FIG. 5

4    4    5

1

5

2

5

Second anodization

FIG. 6

FIG. 7

# FIG. 8

a )      Widening of pores

b )      Opening of pores

c )      Wet etching

d )    Anti-reflection structure      Elimination of alumina

# FIG. 9

a )  Widening of pores

b )  Plasma etching

c ) Anti-reflection structure   Elimination of alumina

EP 1 785 748 A1

# FIG. 10

a) Widening of pores

b) Opening of pores

c) Deposition using silk-screen-printing technique, sol-gel technique, CVD

d) Sintering in the case of silk-screen-printing and sol-gel technique

e) Anti-reflection structure

Elimination of alumina

# FIG. 11

a )

20

b )

30
20

| Evaporation of conductive layer |

c )

40
30
20

| Electroforming |

d )

30
40

| Metal-die insert |

e )

40
30
2

| Moulding |

f )

| Anti-reflection structure |

15   15
2

EP 1 785 748 A1

# FIG. 11'

a )

20

b )

30

20

**Evaporation of conductive layer**

c )

30

40

20

Electroforming

d )

30

40

**Metal-die insert**

e )

40

30

2

**Moulding**

f )

**Anti-reflection structure**

2

EP 1 785 748 A1

# FIG. 12

a)

Widening of pores

b)

Plasma etching or subtractive electrolytic process

c)

Elimination of alumina

Moulding on transparent material

EP 1 785 748 A1

# FIG. 13

a )

4  5  4  5

1

20

Widening of pores

b )

4  4

1

20

Opening of pores

c )

4  4  12'  12'

1

20

Electrolytic deposition

d )

12  12

20

Elimination of alumina

Moulding on transparent material

EP 1 785 748 A1

FIG. 14

a )   Widening of pores

b )   Deposition of conductive film via sputtering

c )   Electroforming

d )   Die insert

e )   Moulding

f )   Anti-reflection structure

FIG. 15

# FIG. 16

Reflectance for different pore depths

FIG. 17

Reflectance for different pore radiuses

# FIG. 18

Reflectance for different
vertical periods

EP 1 785 748 A1

# FIG. 19

Reflectance for different
pillar radiuses

European Patent Office

**EUROPEAN SEARCH REPORT**

Application Number

EP 05 42 5788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KANAMORI Y ET AL: "100 nm period silicon antireflection structures fabricated using a porous alumina membrane mask" APPLIED PHYSICS LETTERS, AIP, AMERICAN INSTITUTE OF PHYSICS, MELVILLE, NY, US, vol. 78, no. 2, 8 January 2001 (2001-01-08), pages 142-143, XP012027976 ISSN: 0003-6951 | 1,23-27, 31-35 | INV. G02B1/11 |
| Y | * the whole document * | 2-12,28, 29 | |
| Y | ASOH ET AL: "Fabrication of self-ordered nanohole arrays on Si by localized anodization and subsequent chemical etching" APPLIED SURFACE SCIENCE, ELSEVIER, AMSTERDAM, NL, vol. 252, no. 5, 11 April 2005 (2005-04-11), pages 1668-1673, XP005175494 ISSN: 0169-4332 * the whole document * | 2-12,28, 29 | |
| | | | TECHNICAL FIELDS SEARCHED (IPC) |
| | | | G02B |
| A | KINTAKA K ET AL: "Antireflection microstructures fabricated upon fluorine-doped SiO2 films" OPTICS LETTERS OPT. SOC. AMERICA USA, vol. 26, no. 21, 1 November 2001 (2001-11-01), pages 1642-1644, XP002380665 ISSN: 0146-9592 * the whole document * | 1 | |

-/--

The present search report has been drawn up for all claims

| Place of search | Date of completion of the search | Examiner |
|---|---|---|
| The Hague | 12 May 2006 | Cohen, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 05 42 5788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAVID C ET AL: "Nano-structured anti-reflective surfaces replicated by hot embossing" MICROELECTRONIC ENGINEERING, ELSEVIER PUBLISHERS BV., AMSTERDAM, NL, vol. 61-62, July 2002 (2002-07), pages 435-440, XP004360566 ISSN: 0167-9317 * the whole document * | 1,13 | |
| A | NISHIO K ET AL: "Ideally ordered metal hole arrays with high aspect ratios prepared from anodic porous alumina" JAPANESE JOURNAL OF APPLIED PHYSICS, PART 2 (LETTERS) JAPAN SOC. APPL. PHYS JAPAN, vol. 42, no. 1A/B, 15 January 2003 (2003-01-15), pages L83-L85, XP002380666 ISSN: 0021-4922 * the whole document * | 13 | |
| A | MASUDA H ET AL: "Preparation of regularly structured porous metal membranes with two different hole diameters at the two sides" THIN SOLID FILMS, ELSEVIER-SEQUOIA S.A. LAUSANNE, CH, vol. 286, no. 1, 30 September 1996 (1996-09-30), pages 88-91, XP004049421 ISSN: 0040-6090 * the whole document * | 13 | TECHNICAL FIELDS SEARCHED (IPC) |
| D,A | WO 2004/079774 A (C.R.F. SOCIETA CONSORTILE PER AZIONI; LAMBERTINI, VITO; PULLINI, DANIE) 16 September 2004 (2004-09-16) * abstract * * page 3, line 6 - line 13 * * page 14, line 20 - line 25 * | 1-35 | |

The present search report has been drawn up for all claims

| Place of search | Date of completion of the search | Examiner |
|---|---|---|
| The Hague | 12 May 2006 | Cohen, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 785 748 A1**

## ANNEX TO THE EUROPEAN SEARCH REPORT
## ON EUROPEAN PATENT APPLICATION NO.

EP 05 42 5788

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2006

| Patent document cited in search report | Publication date | Patent family member(s) | Publication date |
|---|---|---|---|
| WO 2004079774 A | 16-09-2004 | AU 2003288694 A1<br>CN 1692469 A<br>EP 1602123 A1<br>EP 1604052 A2<br>WO 2004079056 A2 | 28-09-2004<br>02-11-2005<br>07-12-2005<br>14-12-2005<br>16-09-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004079774 A1
- WO 2004079056 A2

- WO 2004079774 A